# EUROPÄISCHE PATENTSCHRIFT

(11) **EP 3 992 099 B1**
(45) Veröffentlichungstag und Bekanntmachung des Hinweises auf die Patenterteilung: **09.10.2024**
(21) Anmeldenummer: 20205556.2
(22) Anmeldetag: 03.11.2020
(51) Int. Cl.: B65D 6/04, B65D 6/08, B65G 65/00, B29C 31/00, B65G 60/00

(54) **TRAY UND MAGAZIN ZUM HANDLING VON PROFILEN, SOWIE TRANSPORT- UND BEARBEITUNGSVORRICHTUNG**
TRAY AND MAGAZINE FOR HANDLING PROFILES, AS WELL AS TRANSPORT AND PROCESSING DEVICE
PLATEAU ET MAGASIN POUR LA MANIPULATION DE PROFILÉS, AINSI QUE DISPOSITIF DE TRANSPORT ET DE TRAITEMENT

(43) Veröffentlichungstag der Anmeldung: 04.05.2022
(73) Patentinhaber: Stefan Pfaff Werkzeug- und Formenbau GmbH & Co. KG, 88167 Röthenbach (DE)
(72) Erfinder: SUTTER, Anton, 88178 Simmerberg (DE)
(74) Vertreter: Otten, Roth, Dobler & Partner mbB Patentanwälte

(56) Entgegenhaltungen:
- WO-A1-86/03327
- DE-A1- 102017 116 176
- DE-C1- 10 160 689
- GB-A- 2 112 365
- US-A- 2 774 505
- US-A- 4 656 717

## Beschreibung

Die Erfindung betrifft einen Tray zur Zwischenablage, zum Handling und zum Transport von Profilen sowie ein Magazin mit gestapelten Trays. Ferner werden eine entsprechende Transportvorrichtung sowie eine Bearbeitungsvorrichtung vorgeschlagen, welche insbesondere diese Trays bzw. Magazine verwenden.

Aus DE 10 2017 116 176 A1 und US 2 774 505 A sind Trays bekannt, die die Merkmale des Oberbegriffs des Anspruchs 1 aufweisen.

Profile, die zum Beispiel als Kunststoffspritzteile für Türdichtungen oder dergleichen eingesetzt werden, müssen im Allgemeinen bei der Herstellung mehrere Schritte durchlaufen. Nach ihrer Extrusion müssen Sie in der Regel mit Beschnitten versehen werden. Zudem erfolgt meist eine Anspritzung von Endabschnitten oder die Verbindung mit weiteren Teilprofilen über eine Anspritzung. Nach dem Stand der Technik besteht die Logistik zwischen diesen einzelnen Bearbeitungsschritten, bei der die Profile jeweils herkömmlicherweise in einer Bearbeitungsstation weiterverarbeitet werden, aus einem rein manuellen Handling. D.h. die Profile werden von einer Bearbeitungsstation zur nächsten von Hand transportiert, in eine Form eingelegt oder daraus entnommen. Ferner werden die Profile zu diesem Zweck nach einem Bearbeitungsschritt typischerweise in Boxen gesammelt, zwischengelagert bzw. zur nächsten Station getragen. Auch hier werden die Profile manuell in die Boxen gelegt und auch manuell wieder entnommen. Darüber hinaus wird, wie bereits beschrieben, auch die Positionierung für den nächsten Arbeitsschritt, zum Beispiel des Einlegen eines solchen Profils in eine Form, typischerweise manuell erledigt. Diese zwischen die einzelnen Bearbeitungsschritte zwischengeschaltete manuelle Logistik gemäß dem Stand der Technik ist in der Regel zeitintensiv und personalintensiv.

Die Aufgabe der Erfindung besteht darin, für die Fertigung derartiger Profile Kosten einsparen und den Automatisierungsgrad erhöhen zu können.

Die Aufgabe wird, ausgehend vom bisherigen Stand der Technik durch einen Tray nach Anspruch 1 sowie durch ein Magazin nach Anspruch 7, eine Transportvorrichtung nach Anspruch 8 und eine Bearbeitungsvorrichtung nach Anspruch 12 gelöst.

Durch die in den abhängigen Ansprüchen genannten Maßnahmen sind vorteilhafte Ausführungen und Weiterbildungen der Erfindung möglich.

Der erfindungsgemäße Tray ist als Vorrichtung aus dem Stand der Technik bislang nicht bekannt. Er kann zur Zwischenablage, zum Handling und zum Transport von Profilen eingesetzt werden und umfasst zu diesem Zweck zunächst einen Rahmen und wenigstens zwei Carrier die, ähnlich wie Leisten, zueinander parallel am Rahmen befestigt sind. Auf den Carrier werden jeweils Profile abgelegt und gehaltert. Profile können also in definierter Weise, d.h. in definierter Position und mit definierter Lage, auf dem Carrier gehalten werden, bis sie zur weiteren Verarbeitung entnommen werden müssen. Aufgrund dieser genau bekannten Position der Profile auf dem Carrier kann die Entnahme auch über Roboter vorgenommen werden. Darüber hinaus kann auch das Bestücken des Carriers durch Roboter erfolgen. Schließlich ist ein Anschlag vorgesehen, der eine definierte Position liefert, wenn die Profile auf die jeweiligen Carrier aufgebracht werden, sodass ein definierter Anfangspunkt für jedes auf dem Tray vorbereiteten Profil vorliegt, wenn der Tray zwischengelagert wird oder transportiert wird. In der Regel werden die Profile vom Carrier entnommen, um weiterbearbeitet zu werden. Dadurch, dass an einer Seite des Rahmens ein Anschlag vorgesehen ist, kann entsprechend eine definierte Entnahme der Profile bzw. eine definierte Positionierung der Profile vorgenommen werden. In Längserstreckung der Carriers ist der Anschlag in der Regel an deren Ende, insbesondere am Ende des Rahmens vorgesehen. Von der anderen, gegenüberliegenden Seite kann einen Andrücken erfolgen, um die Position stabil zu halten. Ist der Rahmen das äußere Teil, der auch an den Führungen der Transportstrecken anliegt oder von einem Roboter gegriffen wird, werden die Profile zudem nicht verkratzt.

Der Automatisierungsgrad kann somit verbessert werden. Damit die Profile automatisch zugeführt abgelegt werden können, und zwar ohne zusätzliche Bedienperson. Innerhalb eines bestimmten Profilquerschnitts können Details über verschiedene Produkte Produktlängen in der Produktion flexibel und mehrfach genutzt werden. Es ist auch denkbar, dass ein Tray so bestückt wird, dass auf einem Carrier zwei oder mehr Profile hintereinander angeordnet sind.

Das Vorsehen eines Anschlags bei einem Tray kann auch den Vorteil bieten, dass Toleranzen der Trays untereinander ausgeglichen werden können. Entscheidend ist in der Regel die Positionierung der Profile in Längsrichtung damit für die weiteren Arbeitsschritte eine definierte Lage vorgegeben ist. Dadurch, dass einerseits ein Anschlag auf einer Seite verwendet wird, liegt auch eine wohldefinierte Positionierung des Profils vor. Längentoleranzen des Trays sind dadurch in der Regel unerheblich, weil durch Andrücken der Anschlag als Aufpunkt jeglicher Messung bzw. als Referenzpunkt an wohldefinierter Position liegt. Somit liegen dann auch die Profile an wohldefinierter Position.

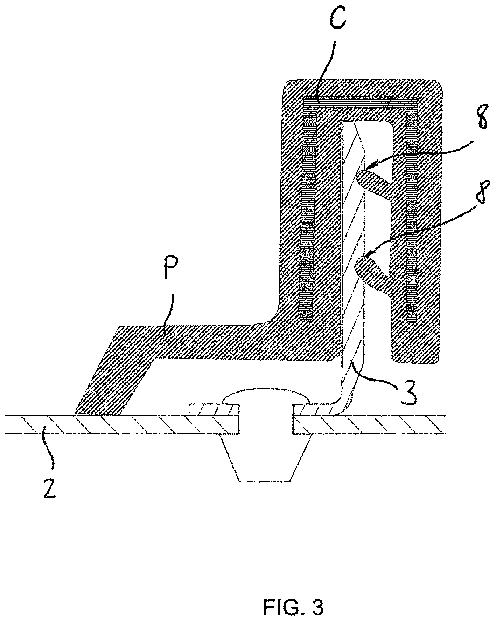

Der Tray gem. der Erfindung umfasst einen Carrier, auf den das Profil aufgesteckt werden kann. Die Profile selbst können im Allgemeinen bereits selbst mit einem (integrierten) Carrier, welcher z.B. aus Kunststoff oder Metall besteht, versehen sein, damit diese eine gewisse Formstabilität im Unterschied zu biegeschlaffen Profilen aufweisen; diese Carrier der Carrier-Profile werden mit diesen mittransportiert. Die Carrier-Profile werden mit ihrem integrierten Carrier auch auf den (weiteren) Carrier auf die Trays aufgesteckt (vgl. Ausführungsbeispiel nach Figur 3) .

Bei einem Ausführungsbeispiel der Erfindung kann der Rahmen selbst den Anschlag bilden. Der Anschlag bildet einen Aufpunkt für jegliche Längenmessung und Positionierung der Profile, die bereits in vordefinierter Weise von den Carrier gehalten werden. Zudem liegt der Rahmen als fester und gegebenenfalls auch als äußerster Bezugspunkt fest und steht ohnehin, z.B. während des Transports, in Kontakt mit anderen Vorrichtungen.

Die Carrier können bei einer Ausführungsform entlang ihrer Längserstreckung eine Verdickung aufweisen, um ein Verrutschen der Profile entlang der einzelnen Carrier zu verhindern.

Typischerweise besitzt ein Profil zum Beispiel einen U-förmigen Abschnitt, der auf den Carrier aufgebracht wird. In Längserstreckung entlang der Carriers kann sich das Profil nur dann bewegen, wenn es nicht eine solche mechanische Barriere überwinden muss. Hierdurch wird zum einen in vorteilhafter Weise ermöglicht, dass auch beim Transport der Trays das Profil stabil auf dem Carriers gelagert wird, und zum anderen, dass gegebenenfalls auch mehrere Profile nicht gegeneinander verrutschen können, sofern diese auf dem Carrier gelagert wurden. Grundsätzlich besteht eine Transportmöglichkeit darin, den Tray auf ein Förderband zu legen und mit dem Förderband mitlaufen zu lassen. Um dies in genau definierter Weise zu ermöglichen, kann insbesondere eine Verzahnung vorgesehen sein, die zum Beispiel entlang einer Rahmenseite verläuft, insbesondere entlang der Seite, die senkrecht zur Längserstreckung der Carrier verläuft. Durch Eingreifen in diese Verzahnung kann somit der Vorschub des Trays ermöglicht werden. In besonders vorteilhafter Weise ermöglicht die Verzahnung eine wohldefinierte Bewegung des Trays auf einem Förderband. Der Vorschub ist durch Eingreifen in die Verzahnung genau definiert, und somit, wie sich die Trays im Einzelnen bewegen.

Erfindungsgemäß sind die Carrier als L-förmige Winkelprofile (aus Aluminium oder auch Edelstahl ausgebildet. Ein Schenkel der L-Form kann dazu verwendet werden, am Rahmen angeschlagen zu werden. Typischerweise können die Carrier am Rahmen angeschraubt, grundsätzlich aber auch vernietet werden. Ferner ist ein Einrasten über Einrastnuten vorgesehen. Einzelne Lamellen der Profile können hierin einrasten, wodurch verhindert werden kann, dass die Profile verrutschen oder sogar beim Transport vom Tray fallen.

Gerade für die Zwischenlagerung ist es besonders vorteilhaft, wenn bei einer Weiterbildung der Erfindung der Tray im bestückten bzw. unbestimmten Zustand auf einem bzw. mehreren weiteren bestückten oder unbestückten Trays gelagert ist. Beim Herstellungsprozess der Profile können die Trays, die eine bestimmte Anzahl an Profilen tragen können gestapelt und zwischengelagert oder zur nächsten Bearbeitungsstation transportiert werden. Zu diesen Zwecken können insbesondere in den Ecken der Trays Abstandshalter vorgesehen sein, sodass die Trays übereinander gestapelt werden können und die Abstandshalter verhindern, dass die Profile gequetscht oder zerkratzt werden. Zudem können die Abstandshalter ein stabiles Lagern der Trays ermöglichen.

Zu diesem Zweck der Zwischenlagerung bzw. zum Transport der Profile kann insbesondere ein Magazin vorgesehen sein, zu dem die Trays gestapelt werden können. Am Boden können hierzu Führungsschienen oder eine Art Palette verwendet werden, auf der die Trays in definierter Weise übereinander abgelegt werden können. Gerade beim Transport über ein Förderband können die einzelnen Tray somit nacheinander automatisiert dem Förderband zugeführt werden, indem die Trays immer einzeln vom Stapel des Magazins genommen werden. Dies kann auch unmittelbar über ein Handling-System erfolgen, mit dem z.B. der obere Tray eines Magazins gegriffen und auf das Förderband überführt wird.

Dementsprechend zeichnet sich eine erfindungsgemäße Transportvorrichtung zum Transport von Profilen dadurch aus, dass ein Förderband und wenigstens ein Tray gemäß der Erfindung vorgesehen ist, wobei das Förderband eine Mitnahmevorrichtung aufweist, die zum Eingriff in die Verzahnung des wenigstens einen Trays vorgesehen ist. Darüber hinaus kann eine derartige Transportvorrichtung in vorteilhafter Weise ein Magazin umfassen, zu dem die Trays gestapelt sind, sodass diese einzeln abgehoben und zum Beispiel auf das Förderband positioniert werden können.

Mittels eines Greifer können die einzelnen Trays von einem Magazinstapel entnommen bzw. auf einen Magazinstapel gelegt werden. Die Greifer-Funktion können Roboter ausführen. Ein derartiger Greifer kann zum Beispiel wie eine Brücke über das Förderband bzw. Magazin verlaufen und mit einer Greifvorrichtung oder mit einem Tablett arbeiten, das unter die Trays gefahren wird und diese anheben und zum Beispiel dem Förderband zuführen kann. Auf diese Weise wird eine besonders einfache und kompakte Automatisierung ermöglicht. Darüber hinaus können mithilfe der Magazine auf sehr kleinem Raum möglichst viele Profile gelagert und weitertransportiert werden. Die Magazine selbst können, wie bereits dargestellt, auf verschiedenen oder auf einer Palette gelagert werden und als solche ebenfalls transportiert werden.

Alternativ können die Trays auch beim ersten Bearbeitungsschritt zum ersten Mal befüllt werden, um dann weiterverarbeitet zu werden.

Darüber hinaus ermöglichen die Trays auch, in einem Magazin gestapelt eine parallele Verarbeitung durchzuführen. Während des Durchlaufs durch eine Bearbeitungsstraße können die Profile von den Trays entnommen und auch wieder aufgebracht werden. Eine andere Möglichkeit besteht darin, die Trays zu entnehmen, der Bearbeitungsstation zuzuführen, die Profile dabei von den Trays zu nehmen und die leeren Trays zu einem neuen Magazin zu stapeln. Die erfindungsgemäßen Trays bzw. entsprechende Ausführungsbeispiele zeichnen sich somit dadurch aus, dass sie ein besonders hohes Maß an Flexibilität bieten und auch nach der Umstellung von Prozessen (z.B. beim Umstellen der Fertigung auf neue Profile) kann mit den gleichen Trays grundsätzlich weitergearbeitet werden. Sie sind somit hervorragend für die Automatisierung geeignet, und es können noch Kosten eingespart werden, da die gleichen Trays für verschiedene Vorgänge einsetzbar sind.

### Ausführungsbeispiele

Ausführungsbeispiele der Erfindung sind in den Zeichnungen dargestellt und werden nachstehend unter Angabe weiterer Einzelheiten und Vorteile näher erläutert. Im Einzelnen zeigen:
- Fig. 1:: einen Tray gem. der Erfindung,
- Fig. 2:: ein Ausschnitt aus Fig. 1 mit einer Verdickung am Carrier,
- Fig. 3:: eine Schnittdarstellung durch einen mit Profil bestückten Carrier eines Trays nach Fig. 1,
- Fig. 4:: eine Transportvorrichtung mit Magazinen gem. der Erfindung, sowie
- Fig. 5:: eine Anordnung mit Transportvorrichtungen gem. der Erfindung und Drehtischen.

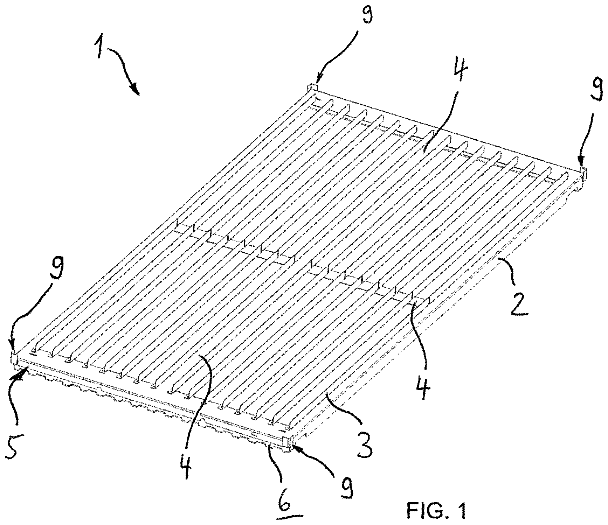

Figur 1 zeigt einen Tray 1, der sich aus einem Rahmen 2 und einer Vielzahl an Carriern 3 zusammensetzt. Die Carrier 3 sind parallel zueinander auf dem Rahmen 2 angeordnet. Um Material einzusparen und eine möglichst gute Zugänglichkeit zu den Carriern 3 sowie den auf ihnen abgelegten Profilen zu ermöglichen, umschließt der Rahmen 2 eine Öffnung. Zur Erhöhung der Stabilität sind lediglich Querverstrebungen 4 vorgesehen, und zwar in Längsrichtung und senkrecht dazu. An einer Seite am Ende der Längsstreben bzw. Carrier 3 ist ein Anschlag 5 vorgesehen. Die Profile können somit in definierter Weise auf den Carriern aufgebracht werden, und der Anschlag dient zudem als Ausgangspunkt für jede Messung bzw. für die definierte Entnahme oder das Aufbringen der Profile. Im unteren Bereich des Rahmens ist eine Verzahnung 6 angeordnet die zum Transport dient. Der Tray 1 kann also zum Beispiel senkrecht zur Längserstreckung der Carriers 3 über ein Förderband transportiert werden. Zum Stapeln der Trays 1 zu sog. Magazinen 20, 30 sind in den jeweiligen Ecken Abstandshalter 9 angebracht, mit denen sich die Trays 1 in einem bestimmten Abstand stapeln lassen, sodass auch die Profile P nicht geklemmt werden. Im vorliegenden Fall handelt es sich bei den Abstandshaltern 9 z.B. um Winkelprofile in den Ecken, die senkrecht zur Rahmenebene stehen.

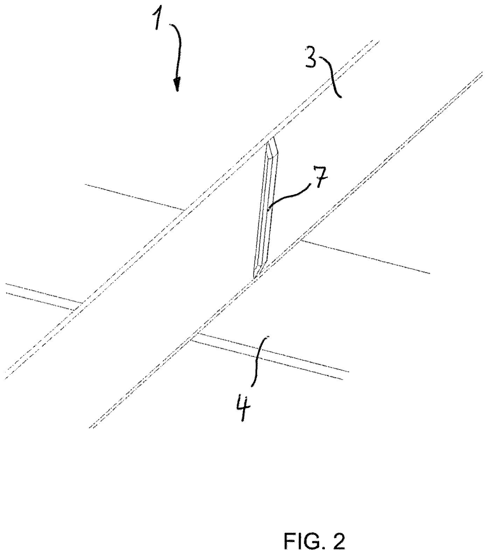

Figur 2 zeigt noch einmal einen Ausschnitt aus Figur 1, wobei die Querstrebe 4 des Rahmens 2 zur Verstärkung dient. Darüber hinaus ist der senkrecht dazu platzierte Carrier 3 zu sehen. Entlang seiner Längserstreckung weist der Carrier 3 eine Verdickung 7 auf, die verhindern soll, dass die Profile in Längsrichtung verschoben werden können.

Figur 3 zeigt einen Längsschnitt durch einen Rahmen 2 mit einem Profil 3 mit einem Carrier 3, auf den ein Profil P aufgesteckt ist. An einem Schenkel ist der Carrier 3 mit dem Rahmen 2 verschraubt. Zudem weist der Carrier 3 Einrastenuten 8 auf, in welche Lamellen des Profils P eingreifen können. Somit werden die Profile P sicher auf dem Carrier 3 gelagert und können nicht herunterfallen oder verrutschen. Das Profil P ist ein Carrier-Profil, das mit einem integrierten Carrier C ausgestattet ist, der im Profil U-förmig ausgebildet ist und für die Formstabilität des Profils P sorgt.

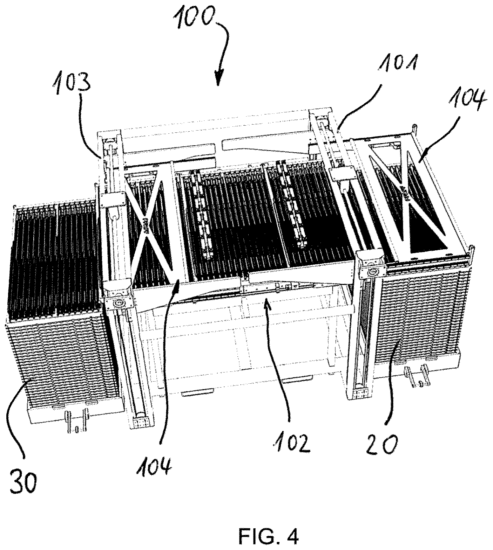

Figur 4 zeigt eine Transportvorrichtung 100 gemäß Erfindung mit zwei Magazinen 20, 30. Das Magazin 20 steht am Anfang der Transportstrecke und ist mit Profilen bestückt. Die Trays 1 werden über einen Greifer 101, vom Magazin-Stapel 20 abgehoben und einem Förderband 102 zugeführt. Das Förderband 102 transportiert die Trays 1 in Richtung Magazin 30. Am Ende der Transportstrecke steht der Greifer 103, der die Trays 1 auf das Magazin 30 wieder aufstapelt. Die Greifer 101, 103 des Förderbands 102 besitzen zum Handling eine Art Tablett 104, das jeweils unter die Trays 1 gefahren wird. Darüber hinaus können an der Transportstrecke des Förderbands 102 Roboter vorgesehen sein, um die Profile zur Bearbeitung zu entnehmen und wieder gegebenenfalls auf die Trays aufzubringen. Im Bereich des Magazins 30 können grundsätzlich aber auch leere Trays gestapelt werden.

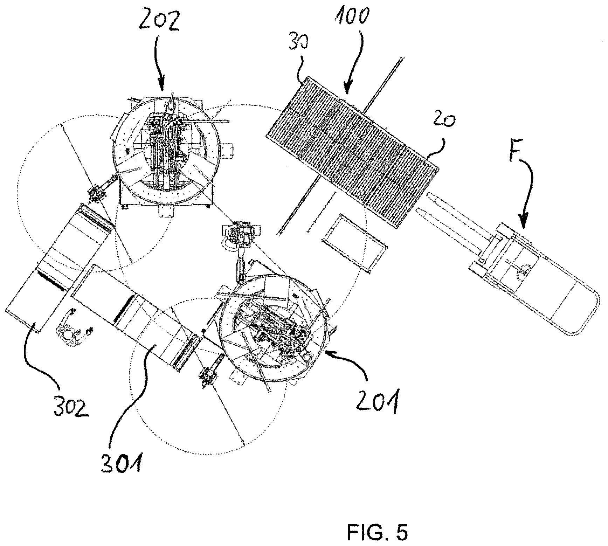

In Figur 5 ist dargestellt, wie eine solche Transportvorrichtung 100 in den Arbeitsbereich zweier Drehtische 201, 202, die als Bearbeitungsstationen fungieren, gebracht werden können, welche jeweils eine Bearbeitung von Profilen vornehmen. Diese können von einer weiteren Transportvorrichtung 100, welche die Profile vereinzelt oder dergleichen gespeist werden. Die in den Drehtischen 201, 202 bearbeiteten Profile werden schließlich über die Transportvorrichtung 100 in den Magazinen 20, 30 abgelegt. In diesem Fall ist das Magazin 20 leer und wird auf der Transportstrecke des Förderbands bestückt. Die bestückten Trays 1 werden auf dem Magazin 30 abgelegt. Die Magazine 20, 30 können mit Hilfe eines Flurförderfahrzeugs F transportiert werden, da die Trays 1 auf einer Art Palette stehen. Zudem können die Drehtische über die Profilvorräte 301, 302 (z.B. Boxen mit Profilen, weitere Magazine) bestückt werden. Z.B. können Profilen und Teilprofile über die Magazine 20, 30 bzw. die Profilvorräte bereitgestellt werden.

### Bezugszeichenliste:

- 1: Tray
- 2: Rahmen
- 3: Carrier
- 4: Querstreben
- 5: Anschlag
- 6: Verzahnung
- 7: Verdickung
- 8: Einrastnut
- 9: Abstandshalter
- 20: Magazin
- 30: Magazin
- 100: Transportvorrichtung
- 101: Greifer
- 102: Förderband
- 103: Greifer
- 104: Tablett / Handling-System für Trays
- 201: Drehtisch
- 202: Drehtisch
- 301: Profilvorrat
- 302: Profilvorrat
- C: im Profil integrierter Carrier
- F: Flurförderfahrzeug
- P: Profil

## Patentansprüche

1. Tray (1) zur Zwischenablage, zum Handling und zum Transport von Profilen (P), umfassend:
• einen Rahmen (2),
• wenigstens zwei Carrier (3), die zueinander parallel am Rahmen (2) befestigt sind, um auf den Carriern (3) jeweils Profile (P) zu haltern und/oder aufzustecken,
• wobei ein Anschlag (5) vorgesehen ist, der an einem Ende der Carrier (3) in deren Längserstreckung und/oder an einem Ende des Rahmens (2) vorgesehen ist, um als Referenzpunkt für die Lage der Profile (P) verwendet zu werden,
**dadurch gekennzeichnet, dass**
die Carrier (3) als L-förmige Winkelprofile ausgebildet sind, wobei ein Schenkel der L-Form zur Befestigung am Rahmen (2) und ein Schenkel zur Halterung der Profile (P) ausgebildet ist,
und wobei die Carrier (3) Einrastnuten (8) zum Einrasten von Profillamellen der Profile aufweisen.

2. Tray (1) nach Anspruch 1, **dadurch gekennzeichnet, dass** der Rahmen (2) den Anschlag (5) bildet.

3. Tray (1) nach einem der vorgenannten Ansprüche, **dadurch gekennzeichnet, dass** die Carrier (3) entlang ihrer Längserstreckung eine Verdickung (7) aufweisen, um ein Verrutschen der Profile (P) zu verhindern.

4. Tray (1) nach einem der vorgenannten Ansprüche, **dadurch gekennzeichnet, dass** eine Verzahnung (6) entlang einer Rahmenseite, insbesondere entlang einer Seite, die senkrecht zur Längserstreckung der Carrier (3) verläuft, vorgesehen ist, um einen Vorschub der Trays zum Transport der Profile (P) zu ermöglichen.

5. Tray (1) nach einem der vorgenannten Ansprüche, **dadurch gekennzeichnet, dass** der Rahmen (2) durch wenigstens eine Querstrebe (4) senkrecht zur Längserstreckung der Carrier (3) und/oder wenigstens eine Längsstrebe parallel zur Längserstreckung der Carrier (3) verstärkt ist.

6. Tray (1) nach einem der vorgenannten Ansprüche, **dadurch gekennzeichnet, dass** der Tray (1) im bestückten und/oder unbestückten Zustand unter und/oder auf einem weiteren Tray (1) im bestückten und/oder unbestückten Zustand stapelbar ist, wobei insbesondere an den Ecken des Trays (1) Abstandshalter (9) angebracht sind, um beim Stapeln der Trays (1) einen Anschlag gegenüber einem darüber bzw. darunter liegenden Tray (1) auszubilden.

7. Magazin (20, 30) zur Zwischenlagerung und/oder zum Transport von Profilen (P), **dadurch gekennzeichnet, dass** wenigstens zwei Trays (1) nach einem der vorgenannten Ansprüche gestapelt angeordnet sind.

8. Transportvorrichtung (100) zum Transport von Profilen, **dadurch gekennzeichnet, dass** ein Förderband (102) und wenigstens ein Tray (1) nach einem der Ansprüche 4-6 vorgesehen sind, wobei das Förderband (102) eine Mitnahmevorrichtung aufweist, die zum Eingriff in die Verzahnung (6) des wenigstens einen Trays (1) vorgesehen ist.

9. Transportvorrichtung (100) nach Anspruch 8, **dadurch gekennzeichnet, dass** ein Magazin (20, 30) vorgesehen ist, zu dem die Trays (1) gestapelt sind.

10. Transportvorrichtung (100) nach einem der Ansprüche 8-9, **dadurch gekennzeichnet, dass** eine Überführungsvorrichtung, insbesondere ein Greifer und/oder Roboter (101, 103) vorgesehen ist, um den wenigstens einen Tray (1) vom Magazin aufzunehmen und auf das Förderband zu legen.

11. Transportvorrichtung (100) nach einem der Ansprüche 8-10, **dadurch gekennzeichnet, dass** wenigstens eine Bestückungsvorrichtung, insbesondere ein Greifer und/oder Roboterarm vorgesehen ist, um Profile vom Tray zu entnehmen und/oder den Tray zu bestücken.

12. Bearbeitungsvorrichtung zur Bearbeitung von Profilen (P) mit einer Transportvorrichtung (100) nach einem der Ansprüche 8-11 und mit einer Bearbeitungsstation (201, 202), wobei eine Bestückungsvorrichtung vorgesehen und dazu ausgebildet ist, die Bearbeitungsstation (201, 202) mit Profilen (P) aus den Trays (1) vom Förderband (102) zu bestücken und die Trays (1) nach der Bearbeitung wieder mit den bearbeiteten Profilen (P) auf dem Förderband (102) zu bestücken.

## Claims

1. Tray (1) for the interim storage, handling and transport of profiles (P), comprising:
• a frame (2),
• at least two carriers (3) which are secured parallel to one another on the frame (2), in order to retain and/or fit respective profiles (P) on the carriers (3),
• wherein a stop (5) provided at one end of the carriers (3) in their longitudinal extent and/or at one end of the frame (2) is provided, in order to be used as a reference point for the position of the profiles (P), **characterized in that** the carriers (3) are in the form of L-shaped angle profiles, wherein one arm of the L shape is designed for securing to the frame (2) and one arm is designed for retaining the profiles (P), and wherein the carriers (3) have latching grooves (8) for the latching engagement of profile lamellae of the profiles.

2. Tray (1) according to Claim 1, **characterized in that** the frame (2) forms the stop (5).

3. Tray (1) according to either of the preceding claims, **characterized in that** the carriers (3) have a thickening (7) along their longitudinal extent, in order to prevent the profiles (P) from slipping.

4. Tray (1) according to one of the preceding claims, **characterized in that** a toothing (6) is provided along one frame side, in particular along a side extending perpendicularly to the longitudinal extent of the carriers (3), in order to make it possible to advance the trays to transport the profiles (P).

5. Tray (1) according to one of the preceding claims, **characterized in that** the frame (2) is reinforced perpendicularly to the longitudinal extent of the carriers (3) by at least one transverse strut (4) and/or parallel to the longitudinal extent of the carriers (3) by at least one longitudinal strut.

6. Tray (1) according to one of the preceding claims, **characterized in that** the tray (1) in the loaded and/or unloaded state can be stacked underneath and/or on top of a further tray (1) in the loaded and/or unloaded state, wherein spacers (9) are provided in particular at the corners of the tray (1) in order to form a stop with respect to a tray (1) situated on top or underneath when the trays (1) are being stacked.

7. Magazine (20, 30) for the intermediate storage and/or transport of profiles (P), **characterized in that** at least two trays (1) according to one of the preceding claims are arranged in a stack.

8. Transportation device (100) for the transport of profiles, **characterized in that** a conveyor belt (102) and at least one tray (1) according to one of Claims 4-6 are provided, wherein the conveyor belt (102) has a driver device, which is provided for engagement in the toothing (6) of the at least one tray (1).

9. Transportation device (100) according to Claim 8, **characterized in that** a magazine (20, 30) formed by stacking the trays (1) is provided.

10. Transportation device (100) according to either of Claims 8-9, **characterized in that** a transfer device, in particular a gripper and/or robot (101, 103) is provided in order to pick up the at least one tray (1) from the magazine and place it onto the conveyor belt.

11. Transportation device (100) according to one of Claims 8-10, **characterized in that** at least one loading device, in particular a gripper and/or robot arm, is provided in order to remove profiles from the tray and/or to load the tray.

12. Processing device for processing profiles (P), comprising a transportation device (100) according to one of Claims 8-11 and comprising a processing station (201, 202), wherein a loading device is provided and designed to load the processing station (201, 202) with profiles (P) from the trays (1) from the conveyor belt (102) and to load the trays (1) with the processed profiles (P) back on the conveyor belt (102) after the processing.

## Revendications

1. Plateau (1) pour la dépose intermédiaire, pour la manipulation et pour le transport de profilés (P), comprenant :
* un cadre (2),
* au moins deux éléments porteurs (3), qui sont fixés au cadre (2) parallèlement l'un à l'autre afin de maintenir et/ou de monter respectivement des profilés (P) sur les éléments porteurs (3),
* une butée (5) étant présente, laquelle est prévue à une extrémité des éléments porteurs (3) dans leur extension longitudinale et/ou à une extrémité du cadre (2) afin d'être utilisée comme point de référence pour la position des profilés (P),
**caractérisé en ce que**
les éléments porteurs (3) sont réalisés sous la forme de cornières en forme de L destinées à être fixées au cadre (2) et une branche est configurée pour le maintien des profilés (P),
et les éléments porteurs (3) possédant des rainures d'encliquetage (8) destinées à l'encliquetage de lamelles de profilé des profilés.

2. Plateau (1) selon la revendication 1, **caractérisé en ce que** le cadre (2) forme la butée (5).

3. Plateau (1) selon l'une des revendications précédentes, **caractérisé en ce que** les éléments porteurs (3) présentent, le long de leur extension longitudinale, un épaississement (7) servant à empêcher un glissement des profilés (P).

4. Plateau (1) selon l'une des revendications précédentes, **caractérisé en ce qu'**une denture (6) est présente le long d'un côté de cadre, notamment le long d'un côté qui suit un tracé perpendiculaire à l'extension longitudinale des éléments porteurs (3), afin de rendre possible un déplacement vers l'avant du plateau pour le transport des profilés (P).

5. Plateau (1) selon l'une des revendications précédentes, **caractérisé en ce que** le cadre (2) est renforcé par au moins une contrefiche transversale (4) perpendiculaire à l'extension longitudinale des éléments porteurs (3) et/ou au moins une contrefiche longitudinale parallèle à l'extension longitudinale des éléments porteurs (3).

6. Plateau (1) selon l'une des revendications précédentes, **caractérisé en ce que** le plateau (1), à l'état garni et/ou non garni, peut être empilé sous et/ou sur un plateau (1) supplémentaire à l'état garni et/ou non garni, des entretoises (9) étant notamment apposées aux coins du plateau (1) afin de former, lors de l'empilage des plateaux (1), une butée par rapport à un plateau (1) qui se trouve au-dessus ou au-dessous de celui-ci.

7. Magasin (20, 30) destiné au stockage temporaire et/ou au transport de profilés (P), **caractérisé en ce qu'**au moins deux plateaux (1) selon l'une des revendications précédentes sont disposés empilés.

8. Dispositif de transport (100) destiné au transport de profilés, **caractérisé en ce qu'**une bande transporteuse (102) et au moins un plateau (1) selon l'une des revendications 4 à 6 sont présents, la bande transporteuse (102) possédant un dispositif d'emport qui est conçu pour venir en prise dans la denture (6) de l'au moins un plateau (1).

9. Dispositif de transport (100) selon la revendication 8, **caractérisé en ce qu'**un magasin (20, 30) est présent, sur lequel les plateaux (1) sont empilés.

10. Dispositif de transport (100) selon l'une des revendications 8 à 9, **caractérisé en ce qu'**un dispositif de transfert, notamment un organe préhenseur et/ou un robot (101, 103) est présent, pour prendre l'au moins un plateau (1) du magasin et le déposer sur la bande transporteuse.

11. Dispositif de transport (100) selon l'une des revendications 8 à 10, **caractérisé en ce qu'**au moins un dispositif de garniture, notamment un organe préhenseur et/ou un bras de robot est présent, pour retirer les profilés du plateau et/ou pour garnir le plateau.

12. Dispositif d'usinage destiné à usiner des profilés (P), comprenant un dispositif de transport (100) selon l'une des revendications 8 à 11 et comprenant une station d'usinage (201, 202), un dispositif de garniture étant présent et configuré pour garnir la station d'usinage (201, 202) avec des profilés (P) à partir des plateaux (1) de la bande transporteuse (102) et, après l'usinage, de garnir de nouveau les plateaux (1) sur la bande transporteuse (102) avec les profilés (P) usinés.
